# EUROPÄISCHE PATENTSCHRIFT

(11) **EP 0 776 861 B1**
(45) Veröffentlichungstag und Bekanntmachung des Hinweises auf die Patenterteilung: **10.05.2000**
(21) Anmeldenummer: 96117269.9
(22) Anmeldetag: 28.10.1996
(51) Int. Cl.: C01B 3/58, H01M 8/06, B01J 12/00, B01J 19/24

(54) **Verfahren und Vorrichtung zur selektiven katalytischen Oxidation von Kohlenmonoxid**
Process and apparatus for selective catalytic oxidation of carbon monoxide
Procédé et dispositif d'oxydation catalytique sélective du monoxyde de carbone

(30) Priorität: 01.12.1995 DE 19544895
(43) Veröffentlichungstag der Anmeldung: 04.06.1997
(73) Patentinhaber: DBB Fuel Cell Engines GmbH, 73230 Kirchheim/Teck-Nabern (DE)
(72) Erfinder: Heil, Dietmar, 88693 Deggenhausertal (DE); Strobel, Barbara, 89160 Dornstadt (DE); Wiesheu, Norbert, 89312 Günzburg (DE); zur Megede, Detlef, Dr., 89347 Bubesheim (DE); Benz, Uwe, 88690 Uhldingen (DE)
(74) Vertreter: Kocher, Klaus-Peter

(56) Entgegenhaltungen:
- WO-A-91/16970
- DE-A- 4 334 981
- DE-A- 4 334 983
- US-A- 4 393 031
- CHEMICAL ENGINEERING PROGRESS, Bd. 75, Nr. 4, April 1979, NEW YORK US, Seiten 61-65, XP002026300 W. A: TASUCHER, F. A. STREIFF: "Static mixing of gases"

## Beschreibung

Die Erfindung bezieht sich auf ein Verfahren zur selektiven katalytischen Oxidation von in einem wasserstoffhaltigen Gasgemischstrom enthaltenem Kohlenmonoxid unter mehrfacher Zugabe eines oxidierenden Gases, bei dem der Gasgemischstrom durch einen das Katalysatormaterial enthaltenden Reaktor hindurchgeleitet wird, sowie auf eine Vorrichtung zur Durchführung dieses Verfahrens.

Verfahren zur selektiven katalytischen Oxidation von Kohlenmonoxid, das in einem wasserstoffhaltigen Gasgemischstrom enthalten ist, werden beispielsweise im Rahmen einer katalytischen Ammoniakherstellung, siehe die Offenlegungsschrift DE 29 30 214, oder im Rahmen einer Bereitstellung von Wasserstoff als Brennstoff für eine Brennstoffzelle, siehe die Offenlegungsschrift WO 93/19005, angewendet. Es sind bereits eine Vielzahl von Verfahren und Vorrichtungen mit geeigneten Katalysatormaterialien für diese selektive katalytische Kohlenmonoxidoxidation bekannt, neben den obigen Druckschriften sei hierzu auf die Auslegeschrift DT 15 67 492 und die Offenlegungsschrift JP 3-208801 (A) hingewiesen. In der letztgenannten Druckschrift erfolgt die Oxidation mit zwei parallelen Reaktoren, denen der Gasgemischstrom und das oxidierende Gas abwechselnd intermittierend zugeführt werden, wobei jeweils ein Reaktor Kohlenmonoxid adsorbiert, während im anderen das zuvor adsorbierte Kohlenmonoxid oxidiert wird. Bei dem in der genannten DE 29 30 214 A1 offenbarten Verfahren wird das oxidierende Gas, dort speziell Luft, dem Wasserstoff und Kohlenmonoxid enthaltenden Gasgemischstrom vor dem Kchlenmonoxid-Oxidationsreaktor zugemischt und gemeinsam mit diesem in den Reaktor eingeleitet.

In der erwähnten WO 93/19005 ist ein ein- oder mehrstufiger Reaktor, bei dem jede Stufe wiederum aus einer oder mehreren parallelen Reaktoreinheiten bestehen kann, zur selektiven katalytischen Kohlenmonoxidoxidation beschrieben, dem eingangsseitig ein im wesentlichen Wasserstoff sowie geringe Mengen Kohlenmonoxid enthaltender Gasgemischstrom zugeführt wird, der beispielsweise von einer Heißdampfreformierung eines Kohlenwasserstoffs, wie Methanol, stammt. Als Alternative zu einer Zumischung von Luft oder Sauerstoff zum Gasgemischstrom vor dem Kohlenmonoxid-Oxidationsreaktor wird die Möglichkeit angegeben, das oxidierende Gas direkt in den Reaktionsraum einzuleiten. Der aus dem Kohlenmonoxid-Oxidationsreaktor austretende, von Kohlenmonoxid gereinigte und im wesentlichen nur noch Wasserstoff enthaltende Gasstrom wird als Brennstoff einer Brennstoffzelle zugeführt. Die Entfernung des Kohlenmonoxids verhindert eine schädliche Vergiftung der Brennstoffzelle. Zur Durchführung der selektiven katalytischen Kohlenmonoxidoxidation ist ein zweistufiger Prozeß mit einer höheren Reaktionsraumtemperatur von ungefähr 160°C in der ersten Stufe und einer niedrigeren Reaktionsraumtemperatur von unterhalb 105°C in der zweiten Stufe vorgesehen. Zur Einstellung dieser Temperaturen sind die Katalysatorbett-Reaktionsräume mit Kühlschlangen jeweiliger Kühlkreisläufe mit steuerbarer Kühlmitteldurchflußmenge durchsetzt.

In der Offenlegungsschrift DE 43 34 983 A1 ist ein Verfahren zur Entfernung von Kohlenmonoxid aus einem wasserstoffreichen Gas in mindestens zwei Stufen beschrieben, bei denen es sich um CO-Oxidationsstufen und/oder Methanisierungsstufen handelt. Im Fall der CO-Oxidation erfolgt diese unter Luftzuspeisung an einem edelmetallhaltigen selektiven Oxidationskatalysator, z.B. aus einem Pt/Al₂O₃-, Ru/Al₂O₃- oder Pt-Zeolith-Material.

In der Offenlegungsschrift DE 43 34 981 A1 ist ein Reaktor zur katalytischen Entfernung von Kohlenmonoxid aus einem wasserstoffreichen Gas mit einem edelmetallhaltigen, selektiven CO-Oxidationskatalysator offenbart, der eine mit dem Katalysatormaterial beschichtete Struktur umfaßt, die eine turbulente Strömung erzeugt und den Wärmetransport begünstigt.

In der Patentschrift US 4.393.031 ist eine Anlage zur Reinigung eines heißen Abgasstroms von darin enthaltenen Stickoxiden durch selektive katalytische Reduktion mit Ammoniak als Reduktionsmittel beschrieben. Die Anlage beinhaltet eine thermische Mischkammer und eine dieser nachgeschaltete Ammoniakmischkammer. Parallel zur thermischen Mischkammer ist in einem separaten Abgasleitungszweig eine Ammoniakerzeugungseinrichtung angeordnet, wobei der von ihr erzeugte Ammoniak über ein Ventil steuerbar in den von der thermischen Mischkammer zur Ammoniakmischkammer geleiteten Abgasstrom zudosierbar ist. Der Ammoniakmischkammer ist ein Stickoxidreduktionskatalysator nachgeschaltet, der ein zur selektiven katalytischen Stickoxidreduktion mit Ammoniak geeignetes Katalysatormaterial beinhaltet. Stromaufwärts der thermischen Mischkammer befindet sich in einem zugehörigen Abgasleitungszweig eine Kühlschleife, durch die über ein Ventil steuerbar ein Abgasteilstrom geleitet und vor der thermischen Mischkammer dem Abgashauptstrom wieder zugeführt werden kann. Dieses Ventil wird in Abhängigkeit von der Temperatur im Stickoxidreduktionskatalysator so gesteuert, daß diese Temperatur in einem gewünschten Bereich gehalten wird.

Der Erfindung liegt als technisches Problem die Bereitstellung eines Verfahrens und einer Vorrichtung der eingangs genannten Art zugrunde, mit denen die Oxidationsreaktion über den Reaktionsweg des Gasgemischstroms hinweg geeignet gesteuert werden kann und bei denen eine Vorkühlung eines von einer Heißdampfreformierung stammenden Gasgemischstroms nicht erfoderlich ist.

Dieses Problem wird durch ein Verfahren mit den Merkmalen des Anspruchs 1 sowie eine Vorrichtung mit den Merkmalen des Anspruchs 6 gelöst.

Verfahrensgemäß wird das oxidierende Gas in einer jeweils gesteuerten oder geregelten Durchflußmenge in den CO-Oxidationsreaktor eingeleitet, wodurch die Wärmeentwicklung der exotherm verlaufenden CO-Oxidationsreaktion gezielt beeinflußt werden kann. In Kombination mit einer Regelung des Kühlmittelvolumenstroms kann somit das Temperaturniveau der CO-Oxidationsstufe gezielt eingestellt werden. Durch die passive Kühlung des Gasgemischstromes mit Hilfe von statischen Mischerstrukturen kann schließlich die Temperatur des Gasgemischstromes bereits vor dem Erreichen des aktiven Reaktionsvolumens an ein gewünschtes Temperaturniveau angepaßt werden. Dies bietet unter anderem den Vorteil, daß bei Verwendung des Reformats aus einer Methanolheißdampfreformierung als eingangsseitiges Gasgemisch eine Reformatzwischenkühlung vor Einleiten in den CO-Oxidationsreaktor, wie dies in herkömmlichen Anlagen häufig vorgesehen ist, nicht unbedingt erforderlich ist. Das Reformat kann vielmehr direkt in den CO-Oxidationsreaktor eingeleitet werden. Ein Reformatkühler kann daher entfallen oder jedenfalls deutlich geringer als üblich ausgelegt werden. Es ist außerdem kein zusätzlicher, komplexer Wärmekreislauf zur Bereitstellung der erforderlichen Reaktortemperatur notwendig.

Die in den Unteransprüchen beschriebenen Ausführungsformen des Verfahrens erlauben eine extrem flexible Prozeßführung und damit eine vergleichsweise hohe Raumgeschwindigkeiten für den Gasgemischstrom. Die damit bereitgestellte flexible Steuerbarkeit der Prozeßführung macht das Verfahren besonders auch für mobile Anwendungen, wie z.B. in brennstoffzellenbetriebenen Kraftfahrzeugen, geeignet.

Eine Weiterbildung des Verfahrens nach Anspruch 5 läßt sich vorteilhaft für Systeme verwenden, bei denen durch eine Methanolreformierung Wasserstoff als Brennstoff für eine Brennstoffzelle gewonnen wird. Bei Einsatz dieses Verfahrens entfällt eine Reformatzwischenkühlung, und die Verwendung eines auf der Brennstoffzellentemperatur gehaltenen Wärmeträgermediums zur Kühlung des CO-Oxidationsreaktors bewirkt, daß der Temperaturgradient zwischen dem Heißdampfreformierungsvorgang und der Brennstoffzelle in der zwischenliegenden CO-Oxidationsstufe gezielt ausgenutzt und so beeinflußt werden kann, daß ein hohes Maß an CO-Oxidation erreicht wird.

Die Anordnung einer statischen Mischerstruktur im Eingangsbereich der CO-Oxidationsstufe dient zur gleichmäßigen Verteilung und Durchmischung des Gasgemischstromes. Vor allem bei einer Zumischung des oxidierenden Gases vor der CO-Oxidationsstufe wird durch die statischen Mischerstrukturen eine Vermischung des oxidierenden Gases mit dem wasserstoffhaltigen Gasgemischstrom bewirkt. Außerdem wird der Kontakt des Gasgemischstromes mit der Außenwand des CO-Oxidationsreaktors erhöht und dadurch eine passive Kühlung des Gasgemischstromes vor dem Erreichen des aktiven Reaktionsvolumens erreicht.

Gemäß Anspruch 9 wird ein kompakter, modular aufgebauter Plattenreaktor zur selektiven katalytischen CO-Oxidation realisiert, der sich in seiner Geometrie ohne Probleme an die übrigen Systemkomponenten anpassen läßt und sich insbesondere für mobile Anwendungen in brennstoffzellengetriebenen Kraftfahrzeugen eignet. Der modulare Plattenreaktoraufbau erlaubt in Verbindung mit der Möglichkeit, längs des Reaktionsweges das oxidierende Gas in einstellbaren Mengen zuzuführen, eine hohe Raumgeschwindigkeit für den Gasgemischstrom, was es ermöglicht, den Reaktor insgesamt mit vergleichsweise geringem Volumen und Gewicht zu bauen.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1: eine Prinzipdarstellung eines mehrstufigen CO-Oxidationsreaktors und
- Fig. 2: eine schematische, perspektivische Explosionsansicht eines kompakten, modular aufgebauten Plattenreaktors zur selektiven katalytischen CO-Oxidation,

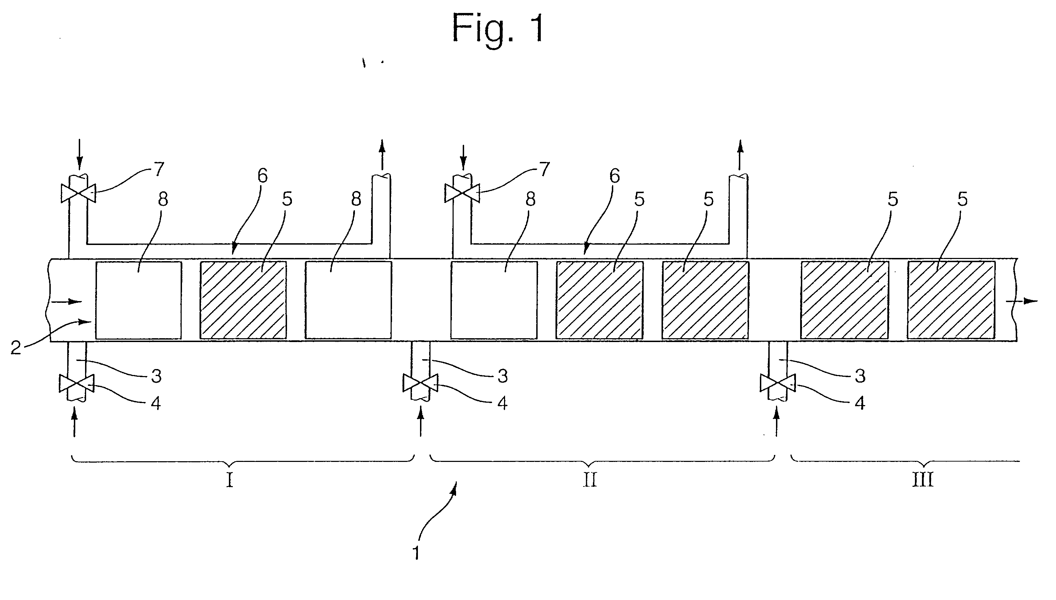

Der in Fig. 1 insgesamt mit 1 gekennzeichnete CO-Oxidationsreaktor besteht aus drei mit I, II und III bezeichneten Oxidationsstufen. Die einzelnen Oxidationsstufen I-III können wie in Fig. 1 dargestellt in einem gemeinsamen Reaktionsraum 2 angeordnet oder aber als separate Bauteile mit externen Verbindungsleitungen ausgeführt werden. Der wasserstoffhaltige Gasgemischstrom wird dem CO-Oxidationsreaktor 1 im Bereich der ersten Oxidationsstufe I zugeführt. In den einzelnen Reaktionsstufen I-III wird der Anteil an Kohlenmonoxid im Gasgemischstrom stufenweise auf einen Wert im Bereich <= 40 ppm reduziert. Anschließend verläßt der Gasgemischstrom den CO-Oxidationsreaktor 1 im Bereich der Oxidationsstufe III.

In den einzelnen Oxidationsstufen I-III wird das Kohlenmonoxid an geeigneten Katalysatormaterialien stufenweise durch eine selektive Oxidation reduziert. Für diese Reaktion wird zusätzlich über Einlaßöffnungen 3 ein oxidierendes Gas, vorzugsweise Sauerstoff oder Luft an mehreren Stellen vor und/oder im CO-Oxidationsreaktor 1 zum Gasgemischstrom zugeführt. An den Einlaßöffnungen 3 sind jeweils Dosiervorrichtungen 4 zur geregelten oder gesteuerten Zugabe des oxidierenden Gases vorgesehen. In Fig. 1 sind diese Dosiervorrichtungen 4 in Form von Ventilen eingezeichnet. Selbstverständlich können auch beliebige andere Dosiervorrichtungen eingesetzt werden.

Als Katalysatormaterial für die selektive CO-Oxidation eignet sich unter anderem Platin und/oder Ruthenium auf einem Träger aus Zeolith oder Aluminiumoxid. Dieses Katalysatormaterial kann in beliebiger Form in den Reaktionsraum 2 eingebracht werden. Neben der Verwendung von Schüttungen oder Pellets ist es vorteilhaft, das Katalysatormaterial auf metallische Katalysatorträgereinheiten 5 aufzubringen. Diese Trägereinheiten 5 haben den Vorteil, daß sie gleichzeitig zur gezielten Strömungsführung eingesetzt werden können. Dadurch ist es möglich, den Stoffaustausch im Reaktionsraum 2 sowie den Wärmeaustausch des Gasgemischstromes mit den Wänden des Reaktionsraumes 2 zu verbessern. Für jede Oxidationsstufe I-III können hierbei ein oder mehrere dieser Katalysatorträgereinheiten 5 vorgesehen werden.

Zur Kühlung des CO-Oxidationsreaktors 1 sind von Kühlmittel durchströmte Kühlräume 6 vorgesehen. Gemäß Fig. 1 weisen die Oxidationsstufen I und II separate Kühlräume 6 auf, denen jeweils über ein Ventil 7 das Kühlmittel dosiert zugeführt wird. Vorzugsweise können die Kühlräume 6 in einem gemeinsamen Kühlkreislauf integriert werden, wobei die beiden Kühlräume 6 seriell oder parallel durchströmt werden. Wird der CO-Oxidationsreaktor 1 in einem Brennstoffzellensystem verwendet, so können die Kühlräume 6 vorzugsweise in den Kühlmittelkreislauf der Brennstoffzelle integriert werden. Denkbar ist es auch, für den gesamten CO-Oxidationsreaktor 1 einen durchgehenden Kühlraum 6 vorzusehen. Die genaue Ausbildung und Anordnung der Kühlräume 6 hängt vom verwendeten Reaktortyp ab. Ist der CO-Oxidationsreaktor 1 beispielsweise als Plattenreaktor ausgebildet, so werden abwechselnd Platten mit integrierten Kühl- beziehungsweise Reaktionsräumen aufeinandergestapelt.

Im Eingangsbereich der I. und II. Oxidationsstufe werden zusätzlich statische Mischerstrukturen 8 angeordnet. Diese haben die Aufgabe, das oxidierende Gas mit dem restlichen Gasgemischstrom ausreichend zu vermischen und eine gezielte Strömungsführung zu gewährleisten. Im Bereich dieser statischen Mischerstrukturen 8 ist kein Katalysatormaterial angeordnet. Als statische Mischerstrukturen 8 können vorzugsweise dieselben Trägereinheiten, die für das Katalysatormaterial verwendet werden, eingesetzt werden, wobei lediglich die Beschichtung mit Katalysatormaterial entfällt. Alternativ können jedoch auch poröse Platten oder andere Vorrichtungen, die die geforderten Eigenschaften aufweisen, eingesetzt werden. Der Einsatz dieser statischen Mischerstrukturen 8 weist noch einen weiteren entscheidenden Vorteil auf. Durch den verbesserten Kontakt des Gasgemischstromes mit den Außenwänden des Reaktionsraumes 2 bewirken die statischen Mischerstrukturen 8 nämlich eine passive Kühlung des eintretenden Gasgemischstromes. Dadurch kann auf eine Vorkühlung des Gasgemischstromes mit separaten Wärmetauschern verzichtet werden.

Im Austrittsbereich der I. Oxidationsstufe kann zur Verhinderung hoher lokaler Konzentrationen des oxidierenden Gases eine zusätzliche Mischerstruktur 8 vorgesehen werden. Abhängig vom herrschenden Temperaturniveau in der jeweiligen Oxidationsstufe I-III könnte es beim direkten Kontakt des zudosierten oxidierenden Gases zu Schäden am Katalysatormaterial kommen. Im Austrittsbereich der II. Oxidationsstufe kann auf die Verwendung einer Mischerstruktur verzichtet werden, da hier sowohl die CO-Konzentration als auch das Temperaturniveau bereits verringert ist. In der III. Oxidationsstufe sind weder Mischerstrukturen 8 noch ein Kühlraum 6 vorgesehen. In dieser letzten Stufe wird Kohlenmonoxid, daß im Teillastbereich durch Nebenreaktionen produziert wird, bei adiabater Betriebsweise und gleichzeitiger Reduktion der Querschnittsfläche oxidiert.

Durch das erfindungsgemäß Verfahren kann der Reaktionsverlauf über den gesamten CO-Oxidationsreaktor 1 auch bei dynamischen Betriebsweisen gezielt eingestellt werden. Die statischen Mischerstrukturen 8 dienen hierbei zur einfachen Einstellung der Eintrittstemperatur des Gasgemischstromes. Dieser kann somit vor dem Erreichen des Katalysatormaterials auf die gewünschte Temperatur gekühlt werden. Durch die Einstellung des Kühlmittelvolumenstroms kann weiterhin die pro Zeiteinheit abgeführte Wärmemenge eingestellt werden. Durch die definierte Zugabe des oxidierenden Gases an mehreren Stellen entlang des Reaktionsweges kann schließlich die Oxidationsreaktion selbst gezielt beeinflußt werden, da die bei der exothermen Oxidationsreakton freiwerdende Energie von der zur Verfügung stehenden Menge an oxidierenden Gas abhängt. Durch die Kombination dieser Maßnahmen kann somit über das gesamte Reaktionsvolumen ein vorgegebener Reaktionsverlauf eingestellt werden. Hierbei können außerdem auch Betriebsparameter berücksichtigt werden, was bei dynamischen Betriebsweisen des CO-Oxidationsreaktors 1 einen wesentlichen Vorteil darstellt. In diesem Fall werden die Dosiervorrichtungen 3, 7 der einzelnen Stufen vorzugsweise von einem zentralen Steuergerät angesteuert.

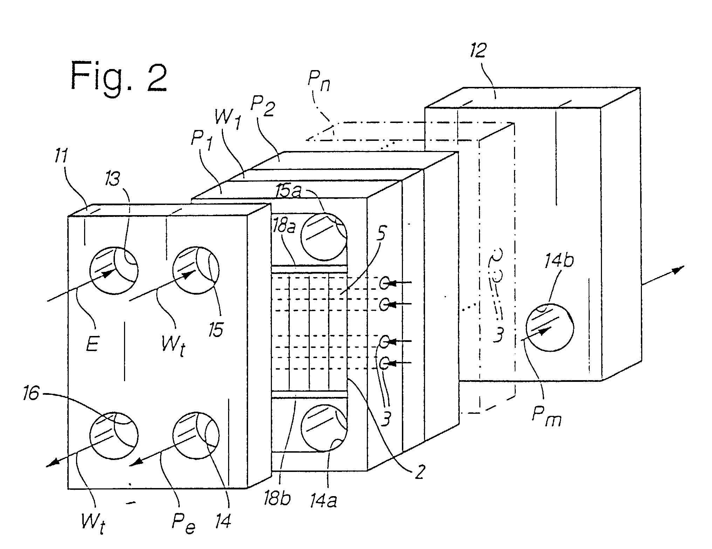

Ein bevorzugtes Ausführungsbeispiel für einen erfindungsgemäßen CO-Oxidationsreaktor 1 zeigt Fig. 2. Dieser kompakte Plattenreaktor läßt sich durch Hintereinanderschalten einer beliebig wählbaren Anzahl n (n≥1) einzelner Plattenreaktormodule (P₁ bis Pₙ) aufbauen. Die einzelnen Module (P₁ bis Pₙ) sind mit einander zugewandten Flachseiten beabstandet hintereinander angeordnet, wobei zwischen zwei Modulen jeweils ein wärmeaufnehmender Raum (W₁ bis Wₙ₋₁) gebildet ist. Nach vorne und nach hinten ist die Plattenreaktormodulreihe durch eine Frontplatte (11) bzw. eine Rückplatte (12) abgeschlossen. In der Frontplatte (11) ist in einem oberen Bereich eine Bohrung (13) als Einlaß für einen Eduktgasstrom (E) vorgesehen, der direkt ohne Zwischenkühlung vom Reformat einer Methanolheißdampfreformierung gebildet ist. Selbstverständlich können auch andere wasserstoff- und kohlenmonoxidhaltige Gasgemischströme in den Reaktor zwecks selektiver katalytischer Kohlenmonoxid(CO)-Oxidation eingeleitet werden. Im unteren Bereich besitzt die Frontplatte (11) einen Produktgasauslaß (14), aus dem der nach der CO-Oxidation erhaltene, CO-gereinigte Produktgasstrom (Pₑ), der im wesentlichen nur noch aus Wasserstoff besteht, austritt, wenn der Reaktor auf frontseitige Produktgasentnahme ausgelegt ist. Bei Auslegung des Reaktors auf rückseitige Produktgasentnahme ist die Rückplatte (12), wie gezeigt, mit einem entsprechenden Auslaß (14b) in ihrem unteren Bereich versehen. Beispielhaft kann bei einstufiger Reaktorauslegung eine frontseitige und bei mehrstufiger Reaktorauslegung eine rückseitige Produktgasentnahme vorgesehen sein. Die Frontplatte (11) besitzt des weiteren einen Einlaß (15) in ihrem oberen sowie einen Auslaß (16) in ihrem unteren Bereich, durch die eine Strömung (Wt) eines Wärmeträgermediums frontseitig in den Reaktor eingeleitet und frontseitig auch wieder herausgeführt wird.

Die einzelnen Reaktorplattenmodule (P₁ bis Pₙ) sind mit zu den oben erwähnten Ein- und Austrittsöffnungen in Frontplatte (11) und Rückplatte (12) passenden Eintritts-, Austritts- oder Durchtrittsöffnungen dergestalt versehen, daß jeweils die gewünschten Strömungsverhältnisse im Reaktor erreicht werden. Diese bestehen zum einen darin, daß das Wärmeträgermedium (Wt) Durchtrittsöffnungen (15a) in jedem Reaktormodul (P₁ bis Pₙ) passiert und in die jeweils dahinterliegenden, wärmeaufnehmenden Räume (W₁ bis Wₙ₋₁) einströmt. Dort strömt das Wärmeträgermedium entlang der begrenzenden Wände des oder der benachbarten Reaktormodule und nimmt die in diesen erzeugte Wärme auf. Das erwärmte Wärmeträgermedium tritt dann aus Durchtrittsöffnungen in den Reaktormodulen (P₁ bis Pₙ) wieder nach vorne aus, wobei die Austritts-Durchtrittsöffnungen den Eintritts-Durchtrittsöffnungen, von denen diejenige (15a) eines ersten Reaktormoduls (P₁) in Fig. 1 zu erkennen ist, diametral entgegengesetzt angeordnet sind, um eine vollständige Durchströmung der wärmeaufnehmenden Räume (W₁ bis Wₙ₋₁) zu bewirken. Bei mehrstufigem Aufbau, d.h. n>1, besitzt jedes der n Reaktormodule (P₁ bis Pₙ) in den beiden übrigen, nicht von den Wärmeträgermedium-Durchtrittsöffnungen belegten Eckbereichen zwei wiederum sich diametral gegenüberliegende Öffnungen, von denen jeweils die eine eine Eintritts- und die andere eine Austrittsöffnung für das Reaktionsgasgemisch darstellen. Dabei ist die Eintrittsöffnung jeweils nur zur Modulvorderseite und die Austrittsöffnung jeweils nur zur Modulrückseite hin offen. Benachbarte Module sind so angeordnet, daß die Einlaßöffnung der hinteren Stufe an die Auslaßöffnung der vorderen Stufe angeschlossen ist. Die Austrittsöffnung der letzten Stufe (Pₙ) mündet in den Auslaß (14b) für den Produktgasstrom (Pₘ) in der Rückplatte (12). Der wasserstoff- und kohlenmonoxidhaltige Gasstrom wird auf diese Weise bei der mehrstufigen Prozeßführung als Reformat über die Frontplatte (11) in den oberen Bereich des ersten Reaktormoduls (P₁) eingeleitet, durchströmt dort einen unten näher beschriebenen Reaktionsraum (2), tritt dann im unteren Bereich vom ersten in das anschließende zweite Reaktormodul (P₂) über, strömt dort von unten nach oben durch dessen Reaktionsraum, tritt dann im oberen Bereich in das nachfolgende Reaktormodul über usw., bis es als Produktgasstrom (Pₘ) an der Rückplatte (12) austritt.

Bei dieser mehrstufigen Prozeßführung mit rückseitigem Produktgasaustritt wird der Produktgasauslaß (14) der Frontplatte (11) verschlossen. Entsprechend wird bei frontseitiger Produktgasentnahme dieser Auslaß (14) geöffnet, wobei außerdem dafür gesorgt wird, daß der Produktgasstrom (Pₑ) nicht an der Rückplatte (12) austritt. Das verwendete Reaktormodul (P₁) ist z.B. zum Zweck einer einstufigen Prozeßführung mit frontseitigem Produktgasaustritt gegenüber dem oben beschriebenen Aufbau dahingehend modifiziert, daß es eine sich zur Vorderseite hin öffnende Austrittsöffnung (14a) besitzt, wie in Fig. 1 illustrativ dargestellt. Gegebenenfalls kann diese Öffnung (14a) im ersten Modul (P₁) als Durchtrittsöffnung gestaltet werden, so daß das Modul sowohl für ein- wie auch für mehrstufige Reaktorauslegung eingesetzt werden kann, wozu dann jeweils lediglich der entsprechende Produktgasauslaß (14, 14b) in der Frontplatte (11) oder der Rückplatte (12) zu verschließen ist. Alternativ zu der gezeigten Strömungsrichtung des Wärmeträgermediums in jedem Modul (P₁ bis Pₙ) von oben nach unten kann alternativ die gegenläufige Strömungsrichtung vorgesehen werden. Bei Bedarf kann jede Reaktorstufe anstelle des gezeigten einen Moduls mehrere, parallel zueinander angeordnete Module enthalten, wobei die Verteilung der Fluide zu geeigneten Verteiler- und Sammelkanälen, mit denen die Reaktionsräume (2) und die wärmeaufnehmenden Räume (W₁ bis Wₙ₋₁) passend verbunden sind, über die Reaktorendplatten (11, 12) erfolgt. Zur Realisierung der wärmeaufnehmenden Räume (W₁ bis Wₙ₋₁) zwischen den Modulreaktorräumen (4) können von den Modulen separierte Hohlraumzellen oder an der Rück- oder Vorderseite der jeweiligen Reaktormodule angeordnete Hohlraumzellen gebildet sein. Die Moduleinheiten können lösbar oder durch übliche Schweißverbindungen unlösbar miteinander verbunden sein, wobei jeweils geeignete Dichtungen vorzusehen sind, um abgedichtete Fluidströmungsverhältnisse für den Reaktionsgasstrom und das Wärmeträgermedium zu gewährleisten.

Zwischen seinem jeweiligen Eintritts- bzw. Austrittsbereich für das Reaktionsgasgemisch weist jedes Reaktormodul (P₁ bis Pₙ) einen Reaktionsraum (2) auf, in dem Katalysatorträgereinheiten (5) angeordnet sind. Die Katalysatorträgereinheiten beinhalten als Träger ein auf einen metallischen Träger aufgebrachtes Zeolith oder Al₂O₃ in Pulverform. Auf diese Trägerstruktur wird ein geeignetes Katalysatormaterial, z.B. Platin und/oder Ruthenium, aufgebracht. In den Reaktionsraum (2) jedes Moduls (P₁ bis Pₙ) sind vorzugsweise mehrere Katalysatorträgereinheiten (5) eingebracht, und zwar sowohl mehrere Einheiten parallel wie auch seriell zur Reaktionsgasströmung. Alternativ kann jedoch auch nur eine Einheit (5) parallel und mehrere, beispielsweise 4 seriell angeordnet werden. Nach unten und oben wird der mit dem Katalysatorträgereinheiten (5) belegte Reaktionsraum (2) jeweils von einer porösen Sintermetallplatte oder einem porösen Vliesmaterial abgedeckt, mit der der Gasgemischstrom homogen über die Katalysatorträgereinheiten (5) verteilt wird. Zusammen mit den Katalysatorträgereinheiten (5) ermöglichen diese porösen Deckschichten (18a, 18b) zudem eine Abstützung der einzelnen Modulkomponenten untereinander, was dazu beitragen kann, eine homogene Abdichtung zwischen den unterschiedlichen Medien zu erreichen.

Wie aus Fig. 1 erkennbar, besteht eine wesentlichen Eigenschaft des Plattenreaktors darin, daß jedes Reaktormodul (P₁ bis Pₙ) mit in den Reaktionsraum (2) führenden Einlaßöffnungen (3) auf unterschiedlicher Höhe bezüglich der Strömungsrichtung des Gasgemischstromes versehen sind, über die das zur CO-Oxidation benötigte Oxidationsmittel, z.B. Luft oder Sauerstoff, vor und/oder zwischen den einzelnen Katalysatorträgereinheiten (5) eingeleitet wird. Beim gezeigten Beispiel wird das oxidierende Gas in ein vorderes Reaktormodul eingeleitet. Neben der Möglichkeit einer aufwendigen Regelung der Oxidationsmittelzufuhr zu den einzelnen Einlaßöffnungen kann die lokale Dosierung auch mit geringem Aufwand durch passive Strömungsverteilerelemente, wie z.B. Blenden, erfolgen. Da die Menge an zugeführtem oxidierendem Gas jeweils das Ausmaß an dort stattfindender, exothermer CO-Oxidation bestimmt, läßt sich auf diese Weise gleichzeitig die Temperatur im Reaktor im Zusammenspiel mit den übrigen hierfür relevanten Parametern auf praktisch jedes gewünschte Temperaturprofil entlang des Strömungsweges des Reaktionsgasgemisches einstellen. Dies hat zum einen zur Folge, daß das Edukt (E) aus einer Methanolheißdampfreformierung direkt ohne die übliche Reformatzwischenkühlung in den CO-Oxidationsreaktor z.B. mit einer Temperatur von ca. 250°C eingeleitet werden kann, was einen entsprechenden Reformatkühler entbehrlich macht oder jedenfalls eine kleinere Auslegung desselben erlaubt. Um bei Verwendung des Plattenreaktors vor einem Brennstoffzellensystem den Produktgasstrom, der im wesentlichen aus reinem Wasserstoff besteht, direkt als Brennstoff in das Brennstoffzellensystem einleiten zu können, wird das durch den Reaktor geleitete Wärmeträgermedium (Wt) auf der Brennstoffzellentemperatur, z.B. auf ca. 80°C, gehalten, so daß das durch den Reaktor strömende Reaktionsgasgemisch von der Reformattemperatur am Reaktoreingang auf die Brennstoffzellentemperatur am Reaktorausgang abkühlen kann. Der dadurch im Reaktor entstehende Temperaturgradient kann vorteilhaft für die selektive katalytische CO-Oxidation genutzt werden, wobei neben der Oxidationsmittelzufuhr auch die übrigen Faktoren, wie die Katalysatorbelegung, längs des Strömungsweges des Reaktionsgasgemisches durch den Reaktor in jeweils passender Weise eingestellt werden.

Die obige Beschreibung macht deutlich, daß mit dem erfindungsgemäßen Reaktor bei relativ geringem Aufwand eine selektive katalytische Oxidation von im Eduktstrom (E) einer Methanolheißdampfreformierung enthaltenem Kohlenmonoxid auf eine sehr flexible Weise durchführbar ist. Insbesondere kann der heiße Reformatgasstrom (Pe, Pm) direkt in den Reaktor geleitet und der austretende Produktgasstrom direkt einer Brennstoffzelle als Brennstoff zugeführt werden. Durch gezielte lokale Einstellung der zugeführten Menge an oxidierendem Gas in Abhängigkeit vom Reaktionsweg läßt sich ein gewünschtes Temperaturprofil im Reaktor einstellen, so daß für jeden Anwendungsfall die günstigsten Reaktionsbedingungen zur höchstmöglichen CO-Entfernung eingestellt werden können. Der Reaktor kann mit vergleichsweise großer Raumgeschwindigkeit gefahren werden und weist ein stabiles Umsatzverhalten auf. Durch den modularen Aufbau kann die Reaktorgröße sowohl hinsichtlich der Anzahl hintereinanderliegender Reaktorstufen als auch hinsichtlich der Größe jeder einzelnen Stufe auf den gegebenen Anwendungsfall hin mit nur geringem Aufwand optimiert bzw. durch Hinzufügen oder Wegnehmen einzelner Module sehr leicht modifiziert werden. Durch die Führung des Reaktionsgasgemisches jeweils in der Plattenebene hintereinanderliegender Modulplatten besitzt der kompakte Plattenreaktor bei gegebener Reaktionsweglänge sehr geringe Abmessungen. Es versteht sich, daß erfindungsgemäße Reaktoren und die mit ihnen durchführbaren erfindungsgemäßen Verfahren nicht auf die CO-Entfernung aus dem Reformat einer Methanolheißdampfreformierung beschränkt sind, sondern sich auch für andere Anwendungen eignen, in denen Kohlenmonoxid durch selektive katalytische Oxidation aus einem wasserstoffreichen Gasgemisch entfernt werden soll.

## Patentansprüche

1. Verfahren zur selektiven katalytischen Oxidation von in einem wasserstoffhaltigen Gasgemischstrom enthaltenem Kohlenmonoxid, wobei der Gasgemischstrom, dem zusätzlich an mehreren Stellen ein oxidierendes Gas zugeführt wird, durch einen das Katalysatormaterial enthaltenden und eine Kühlvorrichtung aufweisenden CO-Oxidationsreaktor hindurchgeleitet wird, und wobei zur Regelung der Reaktortemperatur der Kühlmittelvolumenstrom eingestellt wird,
**wobei**,
die Temperatur des Gasgemischstromes beim Eintritt in den CO-Oxidationsreaktor (1) mit Hilfe von kein Katalysatormaterial enthaltenden statischen Mischerstrukturen (8) verringert wird und das oxidierende Gas jeweils mit einer in Abhängigkeit von Betriebsparametern vorgegebenen Durchflußmenge in den Gasgemischstrom eingeleitet wird.

2. Verfahren nach Anspruch 1,
**dadurch gekennzeichnet,**
daß die Menge an zugeführtem oxidierenden Gas im Verhältnis zum wasserstoffhaltigen Gasgemischstrom in Abhängigkeit von Betriebsparametern variiert wird.

3. Verfahren nach Anspruch 1,
**dadurch gekennzeichnet,**
daß beim Starten des Systems der Kühlmittelvolumenstrom für eine vorgegebene Zeitdauer reduziert wird.

4. Verfahren nach Anspruch 1,
**dadurch gekennzeichnet,**
daß ein mehrstufiger CO-Oxidationsreaktor (1) verwendet wird, wobei zumindest vor jeder Oxidationsstufe (I-III) oxidierendes Gas zum Gasgemischstrom zugeführt wird, und daß durch Steuerung oder Regelung des Kühlmittelvolumenstroms und der Menge des zugeführten oxidierendes Gases die jeweiligen Oxidationsstufen (I-III) auf vorgegebenen Betriebstemperaturen gehalten werden.

5. Verfahren nach Anspruch 1,
**dadurch gekennzeichnet, daß**
- das wasserstoff- und kohlenmonoxidhaltige Gasgemisch das Reformat einer Kohlenwasserstoffreformierung ist und ohne Zwischenkühlung in den CO-Oxidationsreaktor (1) eingeleitet wird,
- das aus dem CO-Oxidationsreaktor (1) austretende, kohlenmonoxidgereinigte Gas einer Brennstoffzelle zugeführt wird und
- zur Kühlung des CO-Oxidationsreaktors (1) der Brennstoffzellen-Kühlkreislauf verwendet wird.

6. Vorrichtung zur selektiven katalytischen Oxidation von in einem wasserstoffhaltigen Gasgemischstrom enthaltenem Kohlenmonoxid mit zumindest einer Katalysatormaterial enthaltenden und eine Kühlvorrichtung aufweisenden CO-Oxidationsstufe und mit mehreren Einlaßöffnungen zur Zufuhr von oxidierendem Gas zum Gasgemischstrom, wobei zur Regelung der Reaktortemperatur der Kühlmittelvolumenstrom eingestellt wird,
**wobei**,
eine Vorrichtung (4) zur betriebsparameterabhängigen Dosierung des jeweils zugeführten oxidierenden Gases vorgesehen ist und im Eingangsbereich den Co-Oxidationsstufe (I-III) eine statische, kein Katalysatormaterial enthaltende Mischerstruktur (8) angeordnet ist.

7. Vorrichtung nach Anspruch 6,
**dadurch gekennzeichnet,**
daß jeweils im Bereich und/oder stromab und/oder stromauf der Einlaßöffnungen (3) statische Mischerstrukturen (8) vorgesehen sind.

8. Vorrichtung nach Anspruch 6,
**dadurch gekennzeichnet,**
daß mehrere solcher CO-Oxidationsstufen (I-III), die durch einen gemeinsamen Kühlkreislauf gekühlt werden, hintereinandergeschaltet werden und daß zusätzlich eine letzte, ungekühlte CO-Oxidationsstufe (III) mit erhöhter Gasströmungsgeschwindigkeit vorgesehen ist.

9. Vorrichtung nach Anspruch 6,
**gekennzeichnet durch**,
einen modularen Aufbau aus einem oder mehreren, hintereinander angeordneten Plattenreaktormodulen (P₁ bis Pₙ), von denen jedes einen Gasgemischeinlaß, einen Gasgemischauslaß, einen zwischen dem Gasgemischeinlaß und dem Gasgemischauslaß angeordneten, das Katalysatormaterial enthaltenden Reaktionsraum (2) sowie eine oder mehrere, längs des Gasgemischströmungsweges im Reaktionsraum (2) hintereinanderliegend angeordnete Einlaßöffnungen (3) für ein direkt in den Reaktionsraum (2) einzuleitendes, oxidierendes Gas aufweist.

10. Vorrichtung nach Anspruch 9,
**dadurch gekennzeichnet,**
daß an der Eingangsseite des Reaktionsraumes (2) eines jeweiligen Reaktormoduls (P₁ bis Pₙ) eine poröse Gasgemischverteilerstruktur (8a) angeordnet ist.

## Claims

1. A process for the selective catalytic oxidation of a carbon monoxide contained in a flow of gaseous mixture containing hydrogen, in which the flow of gaseous mixture to which additionally an oxidising gas is added at several locations, is passed through a CO-oxidation reactor containing a catalyst material and comprising a cooling device and in which the volumetric flow of coolant is adjusted in order to regulate the reactor temperature, whereby the temperature of the flow of gaseous mixture upon entering the CO-oxidation reactor (1) is reduced by means of static mixture structures (8) which do not contain catalyst material, the oxidising gas being introduced into the flow of gaseous mixture in a through flow amount determined as a function of respective operating parameters.

2. A process according to claim 1, characterised in that the amount of oxidising gas added is varied in proportion to the hydrogen-containing flow of gaseous mixture as a function of operating parameters.

3. A process according to claim 1, characterised in that upon the system being started up, the volumetric flow of coolant is reduced for a predetermined period of time.

4. A process according to claim 1, characterised in that a multi-stage CO-oxidation reactor (1) is used whereby at least prior to each oxidation stage (I to III) oxidising gas is added to the flow of gaseous mixture and in that, by controlling or regulating the volumetric flow of coolant and the amount of oxidising gas added, the respective oxidation stages (I to III) are maintained at predetermined operating temperatures.

5. A process according to claim 1, characterised in that
- the hydrogen- or carbon monoxide-containing gaseous mixture is the reformate of a hydrocarbon reforming process and is introduced into the CO-oxidation reactor (1) without any interim cooling,
- the gas cleansed of carbon monoxide and emerging from the CO-oxidation reactor (1) is fed to a fuel cell, and
- the fuel cell cooling circuit is used to cool the CO-oxidation reactor (1).

6. An apparatus for the selective catalytic oxidation of carbon monoxide contained in a flow of gaseous mixture containing hydrogen and having at least one CO-oxidation stage containing a catalyst material and comprising a cooling device and having a plurality of inlet apertures for the supply of oxidising gas to the flow of gaseous mixture whereby in order to cool the reactor temperature, the volumetric flow of coolant is adjusted, whereby a device (4) is provided for the operating parameter-dependent dispensing of the particular oxidising gas being added and a mixer structure (8) containing no catalyst material but which is static is disposed in the intake region of the CO-oxidation stage (I to III).

7. An apparatus according to claim 6, characterised in that static mixture structures (8) are respectively provided in the region and/or downstream and/or upstream of the inlet apertures (3).

8. An apparatus according to claim 6, characterised in that a plurality of such CO-oxidation stages (1 to III) which are cooled by a common cooling circuit, are connected in series and in that a final uncooled CO-oxidation stage (III) with an elevated gas flow velocity is provided.

9. An apparatus according to claim 6, characterised by a modular construction consisting of one or more serially disposed plate reactor modules (P₁ to Pₙ) each of which has a gaseous mixture inlet, a gaseous mixture outlet, a reaction space (2) containing the catalyst material and disposed between the gaseous mixture inlet and the gaseous mixture outlet, and one or a plurality of inlet apertures (3) disposed seriatim along the gaseous mixture flow path in the reaction space (2) and intended for an oxidising gas which is to be introduced directly into the reaction space (2).

10. An apparatus according to claim 9, characterised in that a porous gaseous mixture distributing structure (8a) is disposed on the inlet side of the reaction space (2) of a respective reactor module (P₁ to Pₙ).

## Revendications

1. Procédé d'oxydation catalytique sélective du monoxyde de carbone contenu dans un flux de mélange gazeux hydrogéné, dans lequel le flux du mélange gazeux vers lequel en outre un gaz oxydant est envoyé à plusieurs endroits, est conduit à travers un réacteur d'oxydation de CO contenant le matériau catalyseur et présentant un dispositif de refroidissement, et dans lequel le débit volumétrique de l'agent réfrigérant est ajusté à la régulation de la température du réacteur, dans lequel la température du mélange gazeux à l'entrée dans le réacteur d'oxydation du CO (1) est abaissée au moyen de structures mélangeuses statiques (8) ne contenant aucun matériau catalyseur et ledit gaz oxydant est envoyé dans le flux de mélange gazeux avec un coefficient de débit prédéfini en fonction des paramètres de fonctionnement.

2. Procédé selon la revendication 1, caractérisé en ce que la quantité de gaz oxydant envoyé varie en proportion du flux de mélange gazeux hydrogéné en fonction des paramètres de fonctionnement.

3. Procédé selon la revendication 1, caractérisé en ce que au démarrage du système le débit volumétrique de l'agent réfrigérant est réduit pour une durée prédéfinie.

4. Procédé selon la revendication 1, caractérisé en ce que un réacteur à oxydation du CO (I)à plusieurs étages est utilisé, dans lequel au moins avant chaque étage d'oxydation (I-III) du gaz oxydant est envoyé vers le flux de mélange gazeux, et en ce que lesdits étages d'oxydation (I-III) sont maintenus aux températures de fonctionnement prédéfinies grâce au contrôle ou au réglage du débit volumétrique de l'agent réfrigérant et de la quantité de gaz oxydant introduit.

5. Procédé selon la renvendication 1, caractérisé en ce que :
- le mélange de gaz contenant l'hydrogène et le monoxyde de carbone est le réformat d'un réformage de carbone et d'hydrogène et est introduit dans le réacteur à oxydation du CO (1) sans refroidissement intermédiaire,
- le gaz de monoxyde de carbone purifié sortant du réacteur à oxydation du CO (1) est amené vers une cellule de combustible et
- la cellule de combustible-circuit de refroidissement est utilisée pour le refroidissement du réacteur à oxydation du CO (1)

6. Dispositif d'oxydation catalytique sélective du monoxyde de carbone contenu dans un flux de mélange gazeux hydrogéné avec au moins un étage d'oxydation du CO contenant un matériau catalyseur et présentant un dispositif de refroidissement, et équipé de plusieurs orifices d'admission pour l'arrivée du gaz oxydant dans le flux du mélange gazeux, dans lequel le débit volumétrique de l'agent réfrigérant est ajusté à la régulation de la température du réacteur, dans lequel est prévu un dispositif (4) de dosage dudit gaz oxydant introduit, dépendant des paramètres de fonctionnement, et est fixée, au niveau de la zone d'arrivée de l'étage d'oxydation du CO (I-III), une structure mélangeuse statique ne contenant aucun matériau catalyseur.

7. Dispositif selon la revendication 6 caractérisé en ce que sont prévues des structures mélangeuses statiques (8) dans la zone et/ou en amont et/ou en aval desdits orifices d'admission (3).

8. Dispositif selon la revendication 6 caractérisé en ce que plusieurs de ces étages d'oxydation du CO (I-III), qui sont refroidis par un circuit de refroidissement commun, sont connectés les uns à la suite des autres et que en outre est prévu un dernier étage d'oxydation (III) non refroidi avec une vitesse de flux gazeux augmentée.

9. Dispositif selon la revendication 6 caractérisé en ce qu'il présente un montage modulaire de un ou plusieurs modules de réaction à plaques (P₁ à Pn) disposés les uns à la suite des autres, chacun présentant une arrivée du mélange gazeux, une sortie du mélange gazeux, une chambre de réaction (2) contenant le matériau catalyseur, disposée entre l'arrivée du mélange gazeux et la sortie du mélange gazeux, de même qu'un ou plusieurs orifices d'admission (3) disposés les uns à la suite des autres le long du trajet du flux gazeux dans la chambre de réaction (2) pour l'arrivée direct du gaz oxydant dans la chambre de réaction (2).

10. Dispositif selon la revendication 9, caractérisé en ce qu'est fixée, sur la face d'entrée de la chambre de réaction (2) d'un module du réacteur donné (P₁ à Pn), une structure poreuse de distribution du mélange gazeux (8a).
